# EUROPÄISCHE PATENTSCHRIFT

(11) **EP 2 505 404 B1**
(45) Veröffentlichungstag und Bekanntmachung des Hinweises auf die Patenterteilung: **24.07.2013**
(21) Anmeldenummer: 12160726.1
(22) Anmeldetag: 22.03.2012
(51) Int. Cl.: B60K 1/00

(54) **Elektrische Antriebseinheit**
Electric drive unit
Unité d'entraînement électrique

(30) Priorität: 31.03.2011 DE 102011015623
(43) Veröffentlichungstag der Anmeldung: 03.10.2012
(73) Patentinhaber: Magna Powertrain AG & Co. KG, 8502 Lannach (AT)
(72) Erfinder: Prix, Daniel, 9065 Ebental (AT); Mayr, Franz, 8323 St. Marein bei Graz (AT); Burkart, Katharina, 8010 Graz (AT)
(74) Vertreter: Rausch, Gabriele

(56) Entgegenhaltungen:
- EP-A1- 0 660 492
- EP-A2- 1 049 234
- EP-A2- 1 519 468
- DE-A1-102008 001 607
- DE-T2- 69 923 553

## Beschreibung

Die Erfindung betrifft eine elektrische Antriebseinheit für ein Kraftfahrzeug, insbesondere eine elektrische Achsantriebseinheit, mit einer elektrischen Maschine und einem Schmier- und Kühlkreislauf für die elektrische Maschine, wie z.B. aus EP 1 049 234 bekannt ist.

Eine derartige elektrische Antriebseinheit kann als alleinige Antriebsquelle für ein Kraftfahrzeug dienen (reiner Elektroantrieb an einer Achse). Alternativ kann eine derartige Antriebseinheit unterstützend zu einer Hauptantriebseinheit vorgesehen sein, insbesondere unterstützend zu einer Verbrennungskraftmaschine (Hybridantrieb). Typischerweise ist die elektrische Maschine beispielsweise als ein Drehstrom-Asynchronmotor oder als Permanenterregte Synchronmaschine ausgebildet. Ein Rotor der elektrischen Maschine kann beispielsweise ein Eingangselement eines Achsdifferentialgetriebes antreiben, wobei bedarfsweise zwischen der elektrischen Maschine und dem Achsdifferentialgetriebe zusätzlich ein Übersetzungsgetriebe vorgesehen sein kann, um die Drehzahl des Rotors der elektrischen Maschine ins Langsame zu übersetzen.

Bei einer derartigen elektrischen Antriebseinheit ist eine hohe Leistungsdichte erwünscht, um bei einem gegebenen Bauraum eine möglichst hohe Antriebsleistung bereitstellen zu können. Im Betrieb erzeugt die elektrische Maschine Abwärme, die möglichst wirkungsvoll abgeführt werden soll. Hierbei ist eine effiziente Kühlung der elektrischen Maschine von großer Wichtigkeit, da durch eine effiziente Kühlung die Leistungsausbeute der elektrischen Maschine (d.h. der Wirkungsgrad) signifikant erhöht werden kann. Dies bedeutet umgekehrt, dass zur Erzielung einer bestimmten Antriebsleistung eine geringere Baugröße der elektrischen Komponenten benötigt wird.

Sofern - wie beispielsweise im Falle einer Achsantriebseinheit mit einem Achsdifferentialgetriebe - der elektrischen Maschine ein Getriebe nachgeordnet ist, muss auch dieses gekühlt werden. Vor allem jedoch muss das Getriebe geschmiert werden, wobei an einen Schmierkreislauf für ein Getriebe andere Anforderungen gestellt werden als an einen Kühlkreislauf für eine elektrische Maschine. Es ist in einem solchen Fall zwar möglich, die elektrische Maschine und das Getriebe durch einen gemeinsamen Schmieröl-Kreislauf zu schmieren und zu kühlen, wobei die elektrische Maschine mit einer speziellen Wicklung versehen wird, beispielsweise um die Oberfläche zu vergrößern und hierdurch die Wärmeabfuhr zu verbessern. Dies ist jedoch konstruktiv unerwünscht aufwendig, und letztlich begrenzt die geringe Wärmekapazität von Schmieröl gleichwohl die erzielbare Wärmeabfuhr.

Es ist eine Aufgabe der Erfindung, für eine elektrische Antriebseinheit der genannten Art ein verbessertes Schmier- und Kühlsystem bereitzustellen, das eine höhere Leistungsdichte der elektrischen Maschine ermöglicht, insbesondere im Hinblick auf den bei einer Achsantriebseinheit zur Verfügung stehenden geringen Bauraum.

Diese Aufgabe wird durch eine elektrische Antriebseinheit mit den Merkmalen des Anspruchs 1 gelöst, und insbesondere dadurch, dass der Schmier- und Kühlkreislauf ein wässriges Schmiermittel umfasst, das zumindest durch einen Innenraum der elektrischen Maschine geführt ist, um Teile der elektrischen Maschine in dem Innenraum zu kühlen.

Die elektrische Antriebseinheit umfasst somit einem Schmier- und Kühlkreislauf mit einem wässrigen Schmiermittel, d.h. einem Gemisch aus Wasser und wenigstens einem weiteren Stoff (z.B. einem Alkohol). Insbesondere kann das wässrige Schmiermittel ein Wasser-Glykol-Gemisch aufweisen. Der Wasseranteil des Schmiermittels dient zur besonders wirkungsvollen Kühlung des Innenraums der elektrischen Maschine. Hierfür wird das wässrige Schmiermittel im Innenraum der elektrischen Maschine entlang von Teilen des Innenraums geführt. Somit kann - insbesondere auch in Kombination mit einer Kühlung auch der Außenseite der elektrischen Maschine - die Abwärme der elektrischen Maschine besonders wirkungsvoll aufgenommen und abgeführt werden, da die Abwärme hauptsächlich im Innenraum der elektrischen Maschine entsteht. Zusätzlich kann das wässrige Schmiermittel den Innenraum der elektrischen Maschine schmieren (z.B. Lager der elektrischen Maschine).

Wasser besitzt im Vergleich zu einem typischen Schmieröl eine hohe Wärmekapazität, eine große Wärmeleitfähigkeit und einen dementsprechend großen Wärmeübergangskoeffizienten. Somit kann das wässrige Schmiermittel eine vergleichsweise große Wärmeleistung der elektrischen Maschine aufnehmen und abführen. Hierfür sind keine besonderen Anforderungen an die Wärmeübergangsflächen zu stellen, so dass bei einem einfachen und kompakten Aufbau der elektrischen Antriebseinheit eine hohe Leistungsdichte der elektrischen Maschine erzielt werden kann, d.h. ein hoher Wirkungsgrad.

Vorteilhafte Ausführungsformen der Erfindung sind in den abhängigen Ansprüchen genannt und nachfolgend erläutert.

Für eine besonders wirkungsvolle Kühlung des Innenraums der elektrischen Maschine ist es bevorzugt, dass das wässrige Schmiermittel entlang einer Innenmantelfläche eines Stators der elektrischen Maschine geführt wird. Insbesondere kann das wässrige Schmiermittel an den Wicklungsenden der elektrischen Maschine vorbeigeführt werden, um eine hohe Wärmeleistung aufzunehmen und abzuführen.

Alternativ oder zusätzlich kann das wässrige Schmiermittel entlang einer Außenmantelfläche eines Rotors der elektrischen Maschine geführt sein, der innerhalb eines Stators gelagert ist. Alternativ oder zusätzlich kann das wässrige Schmiermittel auch durch axiale und/oder radiale Kühlkanäle des Rotors (bezogen auf die Drehachse der elektrischen Maschine) geführt werden, um bezüglich der Aufnahme und Abfuhr von Abwärme einen möglichst hohen Wirkungsgrad zu erzielen.

Gemäß einer bevorzugten Ausführungsform umfasst die Antriebseinheit ferner einen der elektrischen Maschine elektrisch vorgeschalteten Inverter, d.h. Wechselrichter, sowie einen eigenen Kühlkreislauf für den Inverter. Bei dieser Ausführungsform sind der Schmier- und Kühlkreislauf für die elektrische Maschine einerseits und der Kühlkreislauf für den Inverter andererseits über einen Wärmetauscher thermisch miteinander gekoppelt. Hierdurch kann die Kühlung der elektrischen Komponenten auf zwei unterschiedlichen Temperaturniveaus erfolgen, d.h. in dem Kühlkreislauf für den Inverter kann ein niedrigeres Temperaturniveau vorgesehen sein als in dem Schmier- und Kühlkreislauf für die elektrische Maschine. Hierdurch kann die elektrische Maschine mit einem hohen Wirkungsgrad betrieben werden, während der zugeordnete Inverter gleichwohl zuverlässig vor Überhitzung geschützt wird. Infolge der wärmetauschenden Verbindung zueinander kann der Kühlkreislauf auch zum Kühlen des wässrigen Schmiermittels des Schmier- und Kühlkreislaufs dienen.

Der genannte Kühlkreislauf für den Inverter umfasst vorzugsweise Kühlwasser, das entlang von Teilen des Inverters geführt ist. Durch die Verwendung von Kühlwasser erfolgt aufgrund der hohen Wärmekapazität und Wärmeleitfähigkeit eine besonders wirkungsvolle Kühlung des Inverters und - über den genannten Wärmetauscher - auch des wässrigen Schmiermittels des Schmier- und Kühlkreislaufs.

Das Kühlwasser des genannten Kühlkreislaufs für den Inverter kann bei einer vorteilhaften Weiterbildung auch entlang von Teilen der elektrischen Maschine geführt werden, um dort die Kühlung zu unterstützen, insbesondere an der Außenseite der elektrischen Maschine, beispielsweise entlang einer Außenmantelfläche eines Stators der elektrischen Maschine. Der genannte Kühlkreislauf kann hierdurch zusätzlich einen äußeren Kühlmantel für die elektrische Maschine bilden.

Gemäß einer alternativen Ausführungsform umfasst die Antriebseinheit einen der elektrischen Maschine elektrisch vorgeschalteten Inverter, wobei das wässrige Schmiermittel des Schmier- und Kühlkreislaufs auch entlang von Teilen des Inverters geführt ist, um diesen zu kühlen. Bei dieser Ausführungsform ist also kein zusätzlicher Kühlkreislauf in wärmetauschender Verbindung zu dem wässrigen Schmiermittel vorgesehen, wodurch sich der Aufbau der elektrischen Antriebseinheit vereinfacht und eine noch geringere Baugröße erzielt werden kann.

Auch bei dieser alternativen Ausführungsform ist es von Vorteil, wenn das wässrige Schmiermittel des Schmier- und Kühlkreislaufs auch entlang einer Außenseite der elektrischen Maschine geführt ist, um dort zusätzlich Abwärme der elektrischen Maschine aufzunehmen und abzuführen, beispielsweise entlang der Außenmantelfläche eines Stators.

Für sämtliche der vorgenannten Ausführungsformen ist es bevorzugt, dass die Antriebseinheit ferner ein Getriebe umfasst, das mit einem Ausgang der elektrischen Maschine (z.B. Rotor) mechanisch gekoppelt ist, wobei das wässrige Schmiermittel des Schmier- und Kühlkreislaufs nicht nur den Innenraum der elektrischen Maschine kühlt, sondern auch entlang von Teilen des Getriebes geführt ist, um das Getriebe zu kühlen und zu schmieren. Somit wird für die speziellen Anforderungen einer elektrischen Antriebseinheit mit einer elektrischen Maschine und einem nachgeordneten Getriebe durch die Verwendung eines wässrigen Schmiermittels ein optimaler Kompromiss erzielt, um eine hohe Leistungsdichte der elektrischen Maschine zu ermöglichen. Vorzugsweise handelt es sich bei dem genannten Getriebe um ein Achsdifferentialgetriebe, das eingangsseitig mit der elektrischen Maschine gekoppelt ist, optional über ein zusätzliches Übersetzungsgetriebe. Generell kann es sich bei dem mit der elektrischen Maschine gekoppelten Getriebe um ein Umlaufgetriebe oder ein Standgetriebe handeln.

Vorzugsweise besitzt das wässrige Schmiermittel eine geringe elektrische Leitfähigkeit derart, dass ein kontinuierlicher elektrischer Stromfluss über wenigstens ein Lager der elektrischen Maschine ermöglicht wird. Mit anderen Worten wird durch eine geringe elektrische Leitfähigkeit des wässrigen Schmiermittels ein (durch die konstruktive Ausführung der elektrischen Maschine verursachter) elektrischer Strom kontinuierlich zugelassen, der über die Lagerung der elektrischen Maschine fließt (entsprechend einem reduzierten Innenwiderstand des Lagers selbst). Hierdurch werden elektrische Entladungen im Lager und somit die Zerstörung der Lageroberflächen verhindert.

Bei sämtlichen der vorgenannten Ausführungsformen kann der Schmier-und Kühlkreislauf der elektrischen Antriebseinheit ferner einen Wärmetauscher aufweisen, über den das wässrige Schmiermittel Wärme an die Umgebung abgibt. Beispielsweise kann dieser Wärmetauscher Kühlrippen an einer Gehäuseaußenseite umfassen, um durch wärmeleitende Verbindung Abwärme von dem wässrigen Schmiermittel an die Umgebungsluft abzugeben.

Die Erfindung wird nachfolgend rein beispielhaft unter Bezugnahme auf die Zeichnungen erläutert. In diesen sind gleiche oder gleichartige Elemente mit denselben Bezugszeichen gekennzeichnet.
- Fig. 1: zeigt eine schematische Ansicht einer elektrischen Antriebseinheit mit einem Schmier- und Kühlkreislauf und einem zusätzlichen Kühlkreislauf.
- Fig. 2 bis 4: zeigen jeweils eine schematische Ansicht einer elektrischen Antriebseinheit mit einem einzigen Schmier-und Kühlkreislauf.

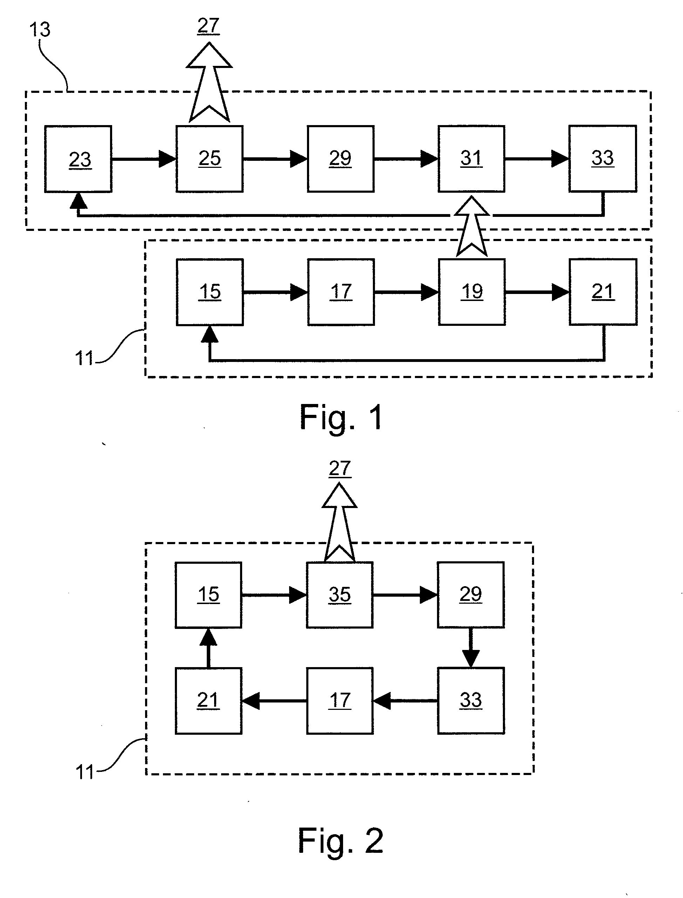

Fig. 1 zeigt eine erste Ausführungsform einer elektrischen Antriebseinheit für ein Kraftfahrzeug, die einen Schmier- und Kühlkreislauf 11 umfasst, der ein wässriges Schmiermittel, d.h. ein wasserbasierendes Schmiermittel enthält. Zusätzlich umfasst die elektrische Antriebseinheit einen Kühlkreislauf 13, der Kühlwasser enthält und auf einem niedrigeren Temperaturniveau betrieben wird als der Schmier- und Kühlkreislauf 11. Bei der elektrischen Antriebseinheit handelt es sich vorzugsweise um eine Achsantriebseinheit, und sie umfasst eine elektrische Maschine, beispielsweise einen Drehstrom-Asynchronmotor oder eine Permanenterregte Synchronmaschine, und ein mit einem Ausgang der elektrischen Maschine gekoppeltes Getriebe. Der Schmier- und Kühlkreislauf 11 mit dem wässrigen Schmiermittel dient zum Kühlen und Schmieren von Teilen der elektrischen Maschine und des Getriebes, während der Kühlkreislauf 13 ergänzend zum Kühlen von Teilen der elektrischen Maschine und einer zugeordneten elektrischen Schalteinrichtung dient. Dies wird nachfolgend im Einzelnen erläutert.

Der Schmier- und Kühlkreislauf 11 mit dem wässrigen Schmiermittel umfasst eine Schmiermittel-Fördereinrichtung 15, die das wässrige Schmiermittel in dem Schmier- und Kühlkreislauf 11 kontinuierlich zirkulieren lässt. Zunächst wird das wässrige Schmiermittel entlang von Teilen des Innenraums 17 der elektrischen Maschine geführt, vorzugsweise zumindest über die Wicklungsenden. Generell kann das wässrige Schmiermittel im Innenraum 17 der elektrischen Maschine entlang einer Innenmantelfläche des Stators der elektrischen Maschine und/oder entlang einer Außenmantelfläche des Rotors und/oder durch axiale und/oder radiale Kühlkanäle des Rotors der elektrischen Maschine geführt werden.

In dem Innenraum 17 der elektrischen Maschine nimmt das wässrige Schmiermittel den wesentlichen Teil der Abwärme der elektrischen Maschine auf. Hierbei ist es von besonderem Vorteil, dass aufgrund der Wasserbasis des wässrigen Schmiermittels ein hoher Wirkungsgrad der Wärmeabfuhr erzielt wird, da der Wasseranteil eine hohe Wärmekapazität und eine große Wärmeleitfähigkeit besitzt.

Das somit erwärmte wässrige Schmiermittel wird einem Schmiermittel/Kühlwasser-Wärmetauscher zugeführt, und zwar der Hochtemperaturseite 19 des Wärmetauschers. Über diesen wird die vom Innenraum 17 der elektrischen Maschine aufgenommene Abwärme an den Kühlkreislauf 13 abgegeben. Das somit abgekühlte wässrige Schmiermittel wird danach Teilen eines Getriebes 21 der elektrischen Antriebseinheit zugeführt, beispielsweise den tribologischen Kontaktflächen und Lagern eines Achsdifferentialgetriebes. Danach wird das wässrige Schmiermittel wieder von der Schmiermittel-Fördereinheit 15 aufgenommen, wobei beispielsweise zwischen dem Getriebe 21 und der Schmiermittel-Fördereinrichtung 15 ein Schmiermittel-Sumpf vorgesehen sein kann (nicht dargestellt).

Der Kühlkreislauf 13 umfasst für das darin enthaltene Kühlwasser eine eigene Kühlwasser-Fördereinrichtung 23. Diese fördert das Kühlwasser zunächst zu einem Kühlwasser-Umgebungsluft-Wärmetauscher 25, der die in dem Kühlwasser enthaltene Abwärme an die Umgebungsluft 27 abgibt, beispielsweise über Kühllamellen oder Kühlrippen. Das derartig abgekühlte Kühlwasser wird sodann entlang einer elektrischen Schalteinrichtung der elektrischen Antriebseinheit geführt, beispielsweise entlang eines Inverters 29. Nach dem Inverter 29 wird das Kühlwasser entlang der Niedertemperaturseite 31 des bereits genannten Schmiermittel/Kühlwasser-Wärmetauschers geführt, um Abwärme aus dem Schmier- und Kühlkreislauf 11 aufzunehmen. Schließlich wird das Kühlwasser des Kühlkreislaufs 13 auch noch dazu genutzt, eine Außenseite 33 der elektrischen Maschine zu kühlen, beispielsweise einen Kühlmantel, der die Außenmantelfläche des Stators der elektrischen Maschine umgibt oder bildet. Schließlich wird das Kühlwasser wieder der Kühlwasser-Fördereinrichtung 23 zugeführt, gegebenenfalls über einen Sumpf.

Die jeweilige Reihenfolge der verschiedenen Komponenten des Schmier-und Kühlkreislaufs 11 und der verschiedenen Komponenten des Kühlkreislaufs 13 kann auch vertauscht sein.

Durch die Verwendung eines wässrigen Schmiermittels in dem Schmier-und Kühlkreislauf 11 für den Innenraum 17 der elektrischen Maschine wird eine besonders effiziente Wärmeabfuhr aus dem Innenraum 17 erzielt. Hierdurch wird eine vorteilhaft hohe Leistungsdichte der elektrischen Maschine erreicht. Ein weiterer Vorteil der Ausführungsform gemäß Fig. 1 besteht darin, dass das wässrige Schmiermittel des Schmier- und Kühlkreislaufs 11 zugleich dazu dient, Teile des Getriebes 21 zu schmieren, so dass hierfür kein zusätzlicher Schmierkreislauf erforderlich ist. Durch die Verwendung eines separaten Kühlkreislaufs 13 wird gewährleistet, dass für die der elektrischen Maschine zugeordnete Schalteinrichtung (Inverter 29) zuverlässig ein niedriges Temperaturniveau eingehalten wird, um die elektrische Schalteinrichtung vor Überhitzung zu schützen. Außerdem wird die Wärmeabfuhrleistung für die elektrische Maschine noch weiter erhöht, da zusätzlich die (kühlere) Außenseite 33 der elektrischen Maschine gekühlt wird.

Fig. 2 zeigt eine gegenüber Fig. 1 vereinfachte Ausführungsform einer elektrischen Antriebseinheit, die lediglich einen Schmier- und Kühlkreislauf 11 mit einem wässrigen Schmiermittel umfasst, d.h. keinen zusätzlichen Kühlkreislauf 13 mit reinem Kühlwasser. Auch hier ist eine Schmiermittel-Fördereinrichtung 15 vorgesehen. Diese fördert das wässrige Schmiermittel zunächst zu einem Schmiermittel/Umgebungsluft-Wärmetauscher 35, von dem die in dem wässrigen Schmiermittel enthaltene Abwärme an die Umgebungsluft 27 abgegeben wird. Das somit abgekühlte wässrige Schmiermittel wird dann, d.h. auf dem niedrigsten Temperaturniveau, entlang einer elektrischen Schalteinrichtung in Form eines Inverters 29 geführt, um diesen zu kühlen. Danach wird das wässrige Schmiermittel entlang der Außenseite 33 der elektrischen Maschine geführt (z.B. Kühlmantel an Außenmantelfläche des Stators).

Nach dem Kühlen der Außenseite 33 der elektrischen Maschine dient das wässrige Schmiermittel zum Kühlen des Innenraums 17 der elektrischen Maschine. Hierfür wird das wässrige Schmiermittel beispielsweise entlang einer Innenmantelfläche des Stators, entlang einer Außenmantelfläche des Rotors und/oder durch axiale und/oder radiale Kühlkanäle des Rotors der elektrischen Maschine geführt. Hierbei wird ein beträchtlicher Teil der Abwärme der elektrischen Maschine aufgenommen, d.h. das wässrige Schmiermittel nimmt nun das höchste Temperaturniveau innerhalb des Schmier- und Kühlkreislaufs 11 ein.

Schließlich wird das wässrige Schmiermittel auch noch einem Getriebe 21 der elektrischen Antriebseinheit zugeführt, um dieses zu schmieren. Von dort wird das wässrige Schmiermittel von der Schmiermittel-Fördereinrichtung 15 angesaugt und wieder in Richtung des Wärmetauschers 35 gepumpt. Zwischen dem Getriebe 21 und der Schmiermittel-Fördereinrichtung 15 kann ein Schmiermittel-Sumpf vorgesehen sein, der insbesondere auch als zusätzlicher Wärmetauscher zum Abgeben von Wärme an die Umgebungsluft 27 dienen kann.

Ein besonderer Vorteil der Ausführungsform gemäß Fig. 2 besteht wiederum darin, dass durch die Verwendung eines wässrigen Schmiermittels, welches durch den Innenraum 17 der elektrischen Maschine geführt wird, eine besonders effiziente Abfuhr der Abwärme erfolgt, wodurch eine hohe Leistungsdichte der elektrischen Maschine ermöglicht wird. Außerdem ist lediglich ein einziger Kreislauf 11 vorgesehen. Dies wird insbesondere dadurch ermöglicht, dass das wässrige Schmiermittel den verschiedenen Kühlstellen in der Reihenfolge des jeweils erwünschten Temperaturniveaus zugeführt wird, also beginnend bei dem Inverter 29 (geringstes Temperaturniveau) über die Außenseite 33 der elektrischen Maschine zu dem Innenraum 17 der elektrischen Maschine (höchstes Temperaturniveau) .

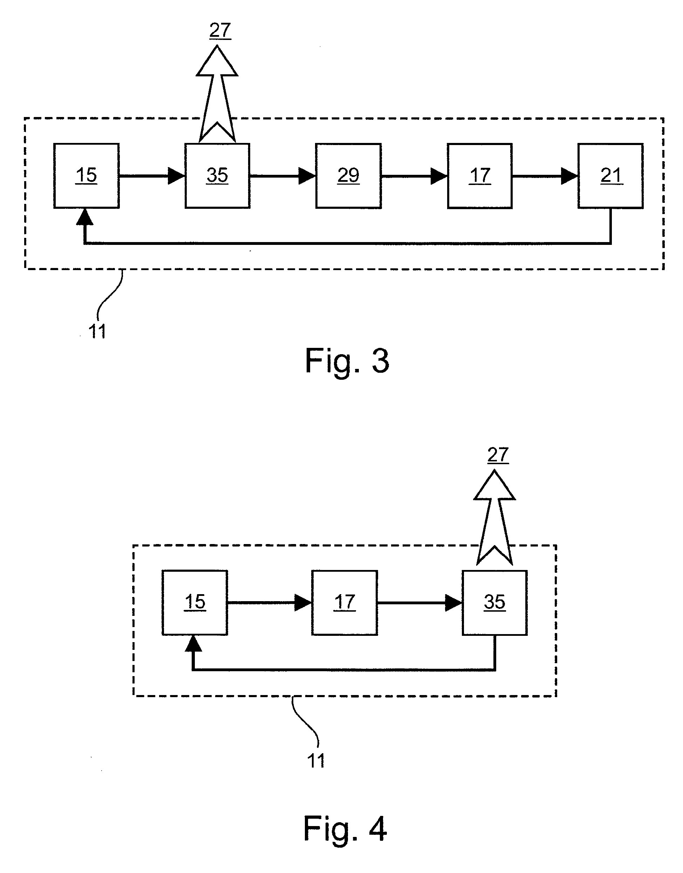

Fig. 3 zeigt eine gegenüber Fig. 2 nochmals vereinfachte Ausführungsform einer elektrischen Antriebseinheit. Der Unterschied zu der Ausführungsform gemäß Fig. 2 besteht darin, dass das wässrige Schmiermittel nicht entlang der Außenseite 33 der elektrischen Maschine geführt wird, sondern lediglich durch den Innenraum 17 der elektrischen Maschine. Hierdurch ergibt sich für den Schmier- und Kühlkreislauf 11 und insbesondere die Führung des wässrigen Schmiermittels ein noch einfacherer konstruktiver Aufbau. Gleichwohl ist eine wirkungsvolle Kühlung der elektrischen Maschine gewährleistet, da der wesentliche Teil der Abwärme aus dem Innenraum 17 der elektrischen Maschine entnommen wird.

Fig. 4 illustriert schließlich, dass im einfachsten Fall der Schmier- und Kühlkreislauf 11 mit dem wässrigen Schmiermittel zum Kühlen lediglich der Aktivteile der elektrischen Maschine, also des Innenraums 17 dient, um die elektrische Maschine wirkungsvoll abzukühlen und hierdurch einen hohen Wirkungsgrad für den Betrieb der elektrischen Maschine zu erzielen. Hierfür sind eine Schmiermittel-Fördereinrichtung 15 und ein Schmiermittel/Umgebungsluft-Wärmetauscher 35 erforderlich. Bei der Ausführungsform gemäß Fig. 4 erfolgt jedoch keine zusätzliche Kühlung einer elektrischen Schalteinrichtung (Inverter 29), und es ist auch kein zusätzliches Schmieren eines Getriebes 21 vorgesehen.

### Bezugszeichenliste

- 11: Schmier- und Kühlkreislauf mit wässrigem Schmiermittel
- 13: Kühlkreislauf mit Kühlwasser
- 15: Schmiermittel-Fördereinrichtung
- 17: Innenraum der elektrischen Maschine
- 19: Hochtemperaturseite des Schmiermittel-/Kühlwasser-Wärmetauschers
- 21: Getriebe
- 23: Kühlwasser-Fördereinrichtung
- 25: Kühlwasser/Umgebungsluft-Wärmetauscher
- 27: Umgebungsluft
- 29: Inverter
- 31: Niedertemperaturseite des Schmiermittel/Kühlwasser-Wärmetauschers
- 33: Außenseite der elektrischen Maschine
- 35: Schmiermittel/Umgebungsluft-Wärmetauscher

## Patentansprüche

1. Elektrische Antriebseinheit für ein Kraftfahrzeug, insbesondere elektrische Achsantriebseinheit,
mit einer elektrischen Maschine und einem Schmier- und Kühlkreislauf (11) für die elektrische Maschine,
**dadurch gekennzeichnet,**
**dass** der Schmier- und Kühlkreislauf (11) ein wässriges Schmiermittel umfasst, das zumindest durch einen Innenraum (17) der elektrischen Maschine geführt ist, um Teile der elektrischen Maschine in dem Innenraum (17) zu kühlen.

2. Elektrische Antriebseinheit nach Anspruch 1, wobei das wässrige Schmiermittel entlang einer Innenmantelfläche eines Stators der elektrischen Maschine geführt ist.

3. Elektrische Antriebseinheit nach einem der vorhergehenden Ansprüche, wobei das wässrige Schmiermittel entlang einer Außenmantelfläche eines Rotors und/oder durch axiale und/oder radiale Kühlkanäle eines Rotors der elektrischen Maschine geführt ist.

4. Elektrische Antriebseinheit nach einem der vorhergehenden Ansprüche, wobei die Antriebseinheit ferner einen der elektrischen Maschine vorgeschalteten Inverter (29) und einen Kühlkreislauf (13) für den Inverter aufweist, wobei der Schmier- und Kühlkreislauf (11) für die elektrische Maschine und der Kühlkreislauf (13) für den Inverter (29) über einen Wärmetauscher (19, 31) thermisch miteinander gekoppelt sind.

5. Elektrische Antriebseinheit nach Anspruch 4, wobei der Kühlkreislauf (13) für den Inverter (29) Kühlwasser umfasst, das entlang von Teilen des Inverters geführt ist.

6. Elektrische Antriebseinheit nach Anspruch 4 oder 5, wobei das Kühlwasser auch entlang der Außenseite (33) der elektrischen Maschine geführt ist, insbesondere entlang einer Außenmantelfläche eines Stators der elektrischen Maschine.

7. Elektrische Antriebseinheit nach einem der Ansprüche 1 bis 3, wobei die Antriebseinheit ferner einen der elektrischen Maschine vorgeschalteten Inverter (29) aufweist, wobei das wässrige Schmiermittel des Schmier- und Kühlkreislaufs (11) auch entlang von Teilen des Inverters geführt ist.

8. Elektrische Antriebseinheit nach Anspruch 7, wobei das wässrige Schmiermittel des Schmier- und Kühlkreislaufs (11) auch entlang der Außenseite (33) der elektrischen Maschine geführt ist, insbesondere entlang einer Außenmantelfläche eines Stators der elektrischen Maschine.

9. Elektrische Antriebseinheit nach einem der vorhergehenden Ansprüche, wobei die Antriebseinheit ferner ein Getriebe (21) umfasst, das mit einem Ausgang der elektrischen Maschine gekoppelt ist, wobei das wässrige Schmiermittel des Schmier- und Kühlkreislaufs (11) auch entlang von Teilen des Getriebes (21) geführt ist, um das Getriebe zu schmieren.

10. Elektrische Antriebseinheit nach einem der vorhergehenden Ansprüche, wobei das wässrige Schmiermittel eine geringe elektrische Leitfähigkeit derart besitzt, dass ein kontinuierlicher elektrischer Stromfluss über wenigstens ein Lager der elektrischen Maschine ermöglicht wird.

11. Elektrische Antriebseinheit nach einem der vorhergehenden Ansprüche, wobei der Schmier- und Kühlkreislauf (11) ferner einen Wärmetauscher (35) aufweist, über den das wässrige Schmiermittel Wärme an die Umgebung abgibt.

## Claims

1. Electrical drive unit for a motor vehicle, in particular an electrical axle drive unit,
having an electrical machine and a lubrication and cooling circuit (11) for the electrical machine, **characterized**
**in that** the lubrication and cooling circuit (11) comprises an aqueous lubricant which is passed at least through an internal area (17) of the electrical machine, in order to cool parts of the electrical machine in the internal area (17).

2. Electrical drive unit according to Claim 1, wherein the aqueous lubricant is passed along an inner envelope surface of a stator of the electrical machine.

3. Electrical drive unit according to one of the preceding claims, wherein the aqueous lubricant is passed along an outer envelope surface of a rotor and/or through axial and/or radial cooling channels in a rotor of the electrical machine.

4. Electrical drive unit according to one of the preceding claims, wherein the drive unit furthermore has an inverter (29), which is connected upstream of the electrical machine, and a cooling circuit (13) for the inverter, wherein the lubrication and cooling circuit (11) for the electrical machine and the cooling circuit (13) for the inverter (29) are thermally coupled to one another via a heat exchanger (19, 31).

5. Electrical drive unit according to Claim 4, wherein the cooling circuit (13) for the inverter (29) comprises cooling water, which is passed along parts of the inverter.

6. Electrical drive unit according to Claim 4 or 5, wherein the cooling water is also passed along the outer face (33) of the electrical machine, in particular along an outer envelope surface of a stator of the electrical machine.

7. Electrical drive unit according to one of Claims 1 to 3, wherein the drive unit furthermore has an inverter (29) which is connected upstream of the electrical machine, wherein the aqueous lubricant in the lubrication and cooling circuit (11) is also passed along parts of the inverter.

8. Electrical drive unit according to Claim 7, wherein the aqueous lubricant in the lubrication and cooling circuit (11) is also passed along the outer face (33) of the electrical machine, in particular along an outer envelope surface of a stator of the electrical machine.

9. Electrical drive unit according to one of the preceding claims, wherein the drive unit furthermore comprises a gearbox (21), which is coupled to an output of the electrical machine, wherein the aqueous lubricant in the lubrication and cooling circuit (11) is also passed along parts of the gearbox (21), in order to lubricate the gearbox.

10. Electrical drive unit according to one of the preceding claims, wherein the aqueous lubricant has a low electrical conductivity such that this allows a continuous electrical current flow via at least one bearing of the electrical machine.

11. Electrical drive unit according to one of the preceding claims, wherein the lubrication and cooling circuit (11) furthermore has a heat exchanger (35), via which the aqueous lubricant emits heat to the surrounding area.

## Revendications

1. Unité d'entraînement électrique pour un véhicule automobile, notamment unité d'entraînement d'essieu électrique ;
avec un moteur électrique et un circuit de graissage et de refroidissement (11) pour le moteur électrique ; caractérisée en ce qui :
le circuit de graissage et de refroidissement (11) comprend un agent lubrifiant aqueux guidé au moins à travers un espace intérieur (17) du moteur électrique en vue de refroidir les parties du moteur électrique dans l'espace intérieur (17).

2. Unité d'entraînement électrique selon la revendication 1, l'agent lubrifiant aqueux étant guidé le long d'une surface intérieure d'enveloppe d'un stator du moteur électrique.

3. Unité d'entraînement électrique selon l'une quelconque des revendications précédentes, l'agent lubrifiant aqueux étant guidé le long d'une surface d'enveloppe extérieure d'un rotor et/ou au travers de canaux de refroidissement axiaux et/ou radiaux d'un rotor du moteur électrique.

4. Unité d'entraînement électrique selon l'une quelconque des revendications précédentes, l'unité d'entraînement comportant en outre un inverseur (29) connecté en amont du moteur électrique et un circuit de refroidissement (13) prévu pour l'inverseur, le circuit de graissage et de refroidissement (11) prévu pour le moteur électrique et le circuit de refroidissement (13) prévu pour l'inverseur (29) étant couplés l'un à l'autre sur le plan thermique par le biais d'un échangeur thermique (19, 31).

5. Unité d'entraînement électrique selon la revendication 4, le circuit de refroidissement (13) prévu pour l'inverseur (29) comprenant de l'eau de refroidissement guidée le long des parties de l'inverseur.

6. Unité d'entraînement électrique selon la revendication 4 ou 5, l'eau de refroidissement étant également guidée le long du côté extérieur (33) du moteur électrique, notamment le long d'une surface d'enveloppe extérieure d'un stator du moteur électrique.

7. Unité d'entraînement électrique selon l'une quelconque des revendications 1 à 3, l'unité d'entraînement comportant en outre un inverseur (29) connecté en amont du moteur électrique, l'agent lubrifiant aqueux du circuit de graissage et de refroidissement (11) étant également guidé le long des parties de l'inverseur.

8. Unité d'entraînement électrique selon la revendication 7, l'agent lubrifiant aqueux du circuit de graissage et de refroidissement (11) étant également guidé le long du côté extérieur (33) du moteur électrique, notamment le long d'une surface d'enveloppe extérieure d'un stator du moteur électrique.

9. Unité d'entraînement électrique selon l'une quelconque des revendications précédentes, l'unité d'entraînement comprenant en outre une transmission (21) couplée à une sortie du moteur électrique, l'agent lubrifiant aqueux du circuit de graissage et de refroidissement (11) étant également guidé le long des parties de la transmission (21) en vue de graisser la transmission.

10. Unité d'entraînement électrique selon l'une quelconque des revendications précédentes, l'agent lubrifiant aqueux possédant une conductivité électrique réduite de telle sorte qu'un flux de courant électrique continu est possible via au moins un palier du moteur électrique.

11. Unité d'entraînement électrique selon l'une quelconque des revendications précédentes, le circuit de graissage et de refroidissement (11) comportant en outre un échangeur thermique (35) via lequel l'agent lubrifiant aqueux restitue la chaleur à l'environnement.
